# EUROPÄISCHE PATENTANMELDUNG

(11) **EP 4 835 136 A1**
(43) Veröffentlichungstag der Anmeldung: **04.11.2026**
(21) Anmeldenummer: 25173600.5
(22) Anmeldetag: 30.04.2025
(51) Int. Cl.: C25B 1/01, B01D 53/32, C25B 1/04, C25B 9/19, C25B 15/08

(54) **VERFAHREN UND SYSTEM ZUR HERSTELLUNG VON AUFKONZENTRIERTEM CO2**

(71) Anmelder: Forschungszentrum Jülich GmbH, 52428 Jülich (DE)
(72) Erfinder: HASLBECK, Matthias, 81241 München-Pasing (DE); VAN PHAM, Chuyen, 90451 Nürnberg (DE); THIELE, Simon, Erlangen 91056 (DE)
(74) Vertreter: Gille Hrabal Partnerschaftsgesellschaft mbB Patentanwälte

(57) **Zusammenfassung**

Die Erfindung betrifft ein Verfahren und ein System zur Herstellung von CO₂. In einem Verfahren zur Herstellung von CO₂ werden in einer elektrochemischen Zelle (2) aus Wasser Hydroxidionen hergestellt. Die Hydroxidionen reagieren mit CO₂ und/oder Hydrogencarbonat zu Hydrogencarbonat und/oder Carbonat. Das hergestellte Hydrogencarbonat und/oder Carbonat reagiert in der elektrochemischen Zelle (2) mit Protonen zu CO₂.

## Beschreibung

Die Erfindung betrifft ein Verfahren und ein System zur Herstellung von CO₂.

CO₂ kann als Ausgangsstoff zur Herstellung einer Vielzahl von Stoffen verwendet werden. Es ist zudem wünschenswert, einen Ausstoß von CO₂ in die Atmosphäre zu verhindern oder CO₂ direkt aus der Atmosphäre abzuscheiden.

Es ist grundsätzlich bekannt, CO₂ direkt aus der Atmosphäre abzuscheiden, beispielsweise mittels einer Alkali- oder Aminwäsche oder festen Sorptionsmitteln wie Zeolithen. Hierbei muss das Sorbens allerdings thermisch regeneriert werden, was energieintensiv ist und aufgrund der hohen erforderlichen Temperaturen (z. B. 900 °C bei der Alkaliwäsche) nicht effizient mit elektrischem Strom aus erneuerbaren Energien erfolgen kann.

Bei elektrochemischen Verfahren werden geringere Temperaturen von ≤ 80°C benötigt. Zum Beispiel ist es bekannt, CO₂ aus der Luft elektrochemisch direkt mittels (Hydrogen)carbonat-Elektrolyseuren abzuscheiden, wobei CO₂ zu Synthesegas CO reduziert wird. Hierbei werden allerdings nur faradaysche Effizienzen von 20%...60% FE_{CO} bei 200 mA/cm² erreicht, da ein Großteil des elektrischen Stroms parasitär für die Elektrolyse von Wasser verwendet wird.

Es ist zudem bekannt, CO₂ aus einem Gasstrom wie z. B. aus dem Abgas einer Verbrennung abzutrennen bzw. aufzukonzentrieren. Derartige Pumpzellen können aber bei der direkten Abscheidung aus der Atmosphäre aufgrund der dort herrschenden niedrigen CO₂-Konzentrationen im Bereich von 420 ppm nur bei sehr geringen Stromdichten betrieben werden. Zudem muss als Betriebsmittel häufig teurer Wasserstoff zugeführt werden, der sich als Verunreinigung dann auch im konzentrierten CO₂ befindet.

Andere Abscheide- und Regenerationsprozesse für CO₂ sind in den Publikationen US 2017 / 0 072 362 A1 und WO 2025 / 019 426 A1 beschrieben.

Es ist die Aufgabe der Erfindung, die Abscheidung von CO₂, insbesondere aus der Atmosphäre, zu verbessern.

Die Aufgabe wird gelöst durch ein Verfahren zur Herstellung von CO₂. Insbesondere werden in einer elektrochemischen Zelle aus Wasser Hydroxidionen hergestellt. Insbesondere reagieren die Hydroxidionen mit CO₂ und/oder Hydrogencarbonat zu Hydrogencarbonat und/oder Carbonat. Insbesondere reagiert das hergestellte Hydrogencarbonat und/oder Carbonat in der elektrochemischen Zelle mit Protonen zu CO₂.

Das erfindungsgemäße Verfahren benötigt keine hohen Temperaturen und kann unmittelbar mit gasförmigem CO₂ gespeist werden. Bei gasförmiger Speisung ist der Betrieb mit höher konzentrierten CO₂ besonders vorteilhaft. Ebenso ist ein Betrieb mit gelöstem Carbonat und/oder Hydrogencarbonat möglich, etwa wenn niedrig konzentriertes CO₂ in einem vorherigen Schritt beispielsweise in einem Gas-Flüssig-Reaktor mit Lauge zu Carbonat-/Hydrogencarbonatlösung reagiert. CO₂ kann gasförmig zugeführt werden. Carbonat/Hydrogencarbonat kann gelöst zugeführt werden.

Das hergestellte CO₂ kann in hochkonzentrierter bzw. reiner Form abgeleitet werden, beispielsweise zu einer nachgeschalteten Elektrolyse oder Speicherung. Insbesondere wird das CO₂ gasförmig erzeugt und/oder abgeleitet. Der CO₂-Gehalt eines gasförmigen Produktstroms kann > 80%, bevorzugt > 95% sein. Eine nachgeschaltete gasgespeiste Elektrolyse kann mit hoher faradayscher Effizienz erfolgen. Es können flüssige Produkte ohne komplexe nachgeschaltete Produkttrennung hergestellt werden. Insbesondere wird CO₂ aufkonzentriert.

Das Verfahren kann auch als Pumpverfahren und die verwendete elektrochemische Zelle auch als Pumpzelle bezeichnet werden.

CO₂ kann zu Hydrogencarbonat reagieren. Hydrogencarbonat kann zu Carbonat reagieren. Die Prozesse können gleichzeitig ablaufen. Carbonat meint Carbonat-Ionen. Hydrogencarbonat meint Hydrogencarbonat-Ionen.

Es kann eine Mischung vorliegen, die Hydrogencarbonat und Carbonat umfasst oder daraus besteht. Diese Mischung kann zu Carbonat umgesetzt werden. Dabei kann Carbonat unverändert bleiben und Hydrogencarbonat zu Carbonat reagieren.

In einer Ausgestaltung werden die Hydroxidionen an einer Kathode der elektrochemischen Zelle hergestellt. Hydroxidionen sind OH⁻-Ionen.

Insbesondere werden Hydroxidionen (OH⁻) an der Kathode hergestellt. Dabei entsteht typischerweise zudem Wasserstoff, z. B. gasförmiger Wasserstoff (H₂). Es kann sich vorteilhaft um eine alkalische Wasserelektrolyse handeln.

In einer Ausgestaltung wird ferner Wasserstoff hergestellt. Der Wasserstoff dient insbesondere dazu, die Protonen zu erzeugen. Insbesondere werden die für die CO₂-Herstellung verwendeten Protonen zumindest anteilig, bevorzugt vollständig aus dem hergestellten Wasserstoff bereitgestellt.

In einer Ausgestaltung wird Wasserstoff an der Kathode hergestellt. Insbesondere wird an der Kathode Wasser elektrolytisch in Wasserstoff und Hydroxidionen zerlegt. Insbesondere wird der hergestellte Wasserstoff zur Anode geleitet.

Insbesondere wird der Wasserstoff durch eine Leitung, etwa eine Schlauchleitung oder Rohrleitung, zur Anode geleitet. Insbesondere handelt es sich um eine externe Leitung. Insbesondere ist vor oder in der Leitung ein Gas-Flüssigkeits-Trenner angeordnet. Auf diese Weise wird sichergestellt, dass nur Wasserstoff geleitet wird.

In einer Ausführungsform wird der Wasserstoff an der Anode zu Protonen oxidiert, beispielsweise an einem Katalysator. Protonen sind H⁺-Ionen. Die Protonen dienen der Herstellung des CO₂. Der Katalysator kann ein Pt/C-Katalysator sein. Erfindungsgemäß ist es möglich, ohne zusätzlichen Wasserstoff auszukommen. Es wird bilanziell kein zusätzlicher Wasserstoff benötigt.

In einer Ausgestaltung erfolgt die Reaktion von Hydrogencarbonat und/oder Carbonat mit Protonen zu CO₂ in einem Festkörperelektrolyten und/oder innerhalb der elektrochemischen Zelle.

Insbesondere werden Hydrogencarbonat, Carbonat und/oder Protonen zu dem Festkörperelektrolyten transportiert. Der Festkörperelektrolyt kann sich zwischen Anode und Kathode der elektrochemischen Zelle befinden, insbesondere mittig. Insbesondere entstehen CO₂ und H₂O in bzw. an dem Festkörperelektrolyten. Insbesondere ist der Festkörperelektrolyt porös.

Insbesondere befindet sich an der Anode, am Festkörperelektrolyten und/oder zwischen Anode und Festkörperelektrolyt eine Protonenaustauschmembran PEM. Insbesondere leitet die PEM und/oder der Festkörperelektrolyt Protonen in Richtung Festkörperelektrolyt bzw. Kathode.

Insbesondere befindet sich an der Kathode, am Festkörperelektrolyten und/oder zwischen Kathode und Festkörperelektrolyt eine Anionenaustauschermembran AEM. Insbesondere leitet die AEM und/oder der Festkörperelektrolyt Hydrogencarbonat und/oder Carbonat in Richtung Festkörperelektrolyt bzw. Anode.

Hydrogencarbonat und Carbonat können mit den Protonen zunächst zu Kohlensäure reagieren und anschließend zu CO₂ und H₂O.

Insbesondere wird der Festkörperelektrolyt mit Wasser durchströmt, bevorzugt mit deionisiertem Wasser. Auf diese Weise können entstehende Gasblasen ausgetragen werden. Zudem können etwaig an den Festkörperelektrolyten angrenzende Membranen befeuchtet werden. Insbesondere wird entstehendes CO₂ in einem ein Gas-Flüssigkeits-Trenner aus dem Wasser abgetrennt. Das Wasser kann rezirkuliert werden. Das CO₂ kann so in hochreiner Form mit bis zu 100 Vol.-% vorliegen, auch wenn die Anode überstöchiometrisch betrieben wird.

In einer Ausführungsform wird die Anode überstöchiometrisch betrieben. Das heißt, dass der Anode mehr Wasserstoff zugeführt wird, als für die vollständige Reaktion benötigt wird. Auf diese Weise wird die elektrochemische Zelle vor ungewünschten, trägen Reaktionen wie der Oxidation von Kohlenstoff geschützt wird, weil zunächst die kinetisch günstigere Wasserstoffoxidation stattfindet. Es wird hierbei zusätzlich zu dem von der Kathode zur Anode transportierten Wasserstoff weiterer Wasserstoff zugeführt.

In einer Ausführungsform wird die Anode zumindest im Wesentlichen stöchiometrisch betrieben. Es wird lediglich der an der Kathode entstehende Wasserstoff genutzt. Somit muss kein externer Wasserstoff zugeführt werden.

In einer Ausgestaltung erfolgt die Reaktion von Hydrogencarbonat und/oder Carbonat mit Protonen an der Anode.

Insbesondere werden Hydrogencarbonat und/oder Carbonat zur Anode geleitet. Insbesondere ist die Anode sauer. Insbesondere erfolgt die Leitung über eine Membran, beispielsweise eine Anionenaustauschmembran (alkalische Membran).

Insbesondere entstehen bei der Reaktion an der Anode CO₂ und Wasser.

In einer Ausgestaltung werden erfolgt die Reaktion des CO₂ und/oder Hydrogencarbonat zu Hydrogencarbonat und/oder Carbonat in der elektrochemischen Zelle, insbesondere in einem Elektrolyten wie z B. einem Festkörperelektrolyten.

Insbesondere werden die Hydroxidionen in einen Bereich der elektrochemischen Zelle transportiert, in welchem das CO₂ und/oder das Hydrogencarbonat vorhanden sind oder transportiert werden. Der Bereich kann ein insbesondere mittig zwischen Anode und Kathode angeordneter Bereich sein. Der Bereich kann einen Elektrolyten enthalten, beispielsweise einen Festkörperelektrolyten. Insbesondere reagieren die Hydroxidionen in dem Bereich der elektrochemischen Zelle mit dem CO₂ und/oder dem Hydrogencarbonat. Insbesondere entstehen Hydrogencarbonat und/oder Carbonat in dem Bereich

Der Elektrolyt ist insbesondere zur Leitung von Anionen eingerichtet. Der Elektrolyt ist insbesondere nicht zur Leitung von Kationen und/oder Protonen eingerichtet.

Die Hydroxidionen werden insbesondere durch eine Anionenaustauschmembran in den Bereich transportiert

In einer Ausgestaltung werden wird eine Lösung von Carbonat und/oder Hydrogencarbonat in die elektrochemische Zelle geleitet.

In der elektrochemischen Zelle erfolgt dann insbesondere eine Reaktion von Hydrogencarbonat zu Carbonat. Insbesondere wird das Hydrogencarbonat im Wesentlichen vollständig oder vollständig zu Carbonat umgesetzt. Carbonat wird bevorzugt durch eine Membran, insbesondere eine Anionen leitende Membran, zur Anode transportiert.

Insbesondere wird die Lösung aus einem Gas-Flüssig-Reaktor in die elektrochemische Zelle geleitet. Eine Lösung mit entstehenden Hydroxidionen wird insbesondere aus der elektrochemischen Zelle herausgeleitet, insbesondere in den Gas-Flüssig-Reaktor.

In einer Ausgestaltung wird gasförmiges CO₂ in die elektrochemische Zelle geleitet.

Insbesondere reagiert das gasförmige CO₂ zu Hydrogencarbonat und/oder Carbonat. Das Zuführen von gasförmigem CO₂, insbesondere aus Punktquellen wie Verbrennungsprozessen, etwa in Kraftwerken, ist besonders einfach.

In einer Ausgestaltung reagiert CO₂ in einem Gas-Flüssig-Reaktor mit einer Lauge zu Hydrogencarbonat und/oder Carbonat. Insbesondere wird das entstehende Hydrogencarbonat und/oder Carbonat in die elektrochemische Zelle geleitet.

Die Reaktion der Hydroxidionen mit CO₂ erfolgt in dieser Ausgestaltung nicht in der elektrochemischen Zelle, sondern im Gas-Flüssig-Reaktor.

Insbesondere wird gasförmiges CO₂ und/oder atmosphärisches CO₂ in den Gas-Flüssig-Reaktor geleitet. Insbesondere hat das CO₂ im Zustrom des Gas-Flüssig-Reaktors eine niedrige Konzentration von beispielsweise weniger als 1000 ppm. Es können jedoch auch beliebig höhere Konzentrationen vorliegen. Insbesondere wird das Gas im Gas-Flüssig-Reaktor mit der in flüssiger Form vorliegenden Lauge in Kontakt gebracht. Bevorzugt liegt die Lauge in einer wässrigen Lösung vor.

Typischerweise liegt zwischen Carbonat und Hydrogencarbonat ein Gleichgewicht vor. Es werden also typischerweise sowohl Carbonat als auch Hydrogencarbonat hergestellt. Das Gleichgewicht kann unter anderem abhängen von pH-Wert, Temperatur, Druck, und/oder Ausgangskonzentration der Lauge.

Ein Gas-Flüssig-Reaktor im Sinne der Erfindung ist ein Reaktor, in dem ein Kontakt zwischen einer gasförmigen Phase und einer flüssigen Phase erfolgt, insbesondere um einen Stoffaustausch zu realisieren. Grundsätzlich können alle Gas-Flüssig-Reaktoren verwendet werden, beispielsweise Blasensäule/Blasentank, Kolonne, Schlaufenreaktor, Fallfilmreaktor, Sprühturm bzw. Sprühwäscher, usw.

Insbesondere wird das entstehende Hydrogencarbonat in die elektrochemische Zelle geleitet, um dort mit den Hydroxidionen zu reagieren.

Insbesondere wird das Verfahren so ausgeführt, dass HCO₃⁻ und/oder gelöstes CO₂, falls vorhanden, mit Hydroxidionen reagieren. Diese Reaktion, die sehr rasch bzw. schlagartig erfolgt, verhindert, dass Hydroxidionen ungewünscht die beispielsweise alkalische Membran passieren. Um dies zu erreichen, wird eine ausreichende Konzentration von HCO₃⁻ und/oder gelöstem CO₂ eingestellt. Dies kann beispielsweise durch eine geeignete Wahl der Ausgangskonzentration der Lauge und/oder durch geeignete Bemessung des relativen Größenverhältnisses von Gas-Flüssig-Reaktor und elektrochemischer Zelle erfolgen. Die Konzentration der Lauge kann beispielsweise in der Größenordnung (im Sinne von Zehnerpotenz) von 1 mol/L liegen, was einem pH-Wert von 14 entspricht.

Grundsätzlich kann jede Lauge, bevorzugt starke Lauge, verwendet werden. Beispielsweise wird KOH oder NaOH verwendet. KOH hat sich als besonders vorteilhaft erwiesen und wird deshalb im Folgenden hauptsächlich genannt. Die Lauge dient dazu, Hydroxidionen bereitzustellen, mit denen gasförmiges CO₂ aus einem Gasgemisch zu Hydrogencarbonat (HCO₃⁻) und/oder Carbonat (CO₃²⁻) reagieren kann. Beispielhaft lässt sich mit einem Gasblasenreaktor eine Abscheideeffizienz von > 99% erreichen. Bei einer anfänglichen 1 mol/L KOH-Lösung kann so bei 25°C eine Lösung mit 0,23 mol/L Hydrogencarbonat und 0,39 mol/L Carbonat erzeugt werden. Das entspricht bei einer atmosphärischen CO₂-Konzentration von 420 ppm einem Aufkonzentrieren um den Faktor 37.000.

In einer Ausgestaltung werden die in der elektrochemischen Zelle entstehende Hydroxidionen in den Gas-Flüssig-Reaktor geleitet.

Auf diese Weise wird das Sorbens, also die Lauge, regeneriert. Dies kann kontinuierlich erfolgen. Bevorzugt wird ein Flüssigkeitsstrom vom Gas-Flüssig-Reaktor zur elektrochemischen Zelle, bevorzugt zur Kathode, hergestellt. Beispielsweise enthält ein solcher Flüssigkeitsstrom Wasser und im Falle von KOH insbesondere K⁺-Ionen. Bevorzugt wird ein Flüssigkeitsstrom von der elektrochemischen Zelle, bevorzugt von der Kathode, zum Gas-Flüssig-Reaktor, hergestellt. Beispielsweise enthält ein solcher Flüssigkeitsstrom Hydroxidionen, ggf. Wasser, möglicherweise etwas weniger, und im Falle von KOH insbesondere K⁺-Ionen. Es kann in der elektrochemischen Zelle die Lauge, z. B. Kalilauge hergestellt werden und in den Gas-Flüssig-Reaktor eingeleitet werden.

Ein weiterer Aspekt der Erfindung ist ein System zur Herstellung von CO₂. Das System umfasst eine elektrochemische Zelle zur Herstellung von Hydroxidionen aus Wasser. Die Hydroxidionen dienen insbesondere der Durchführung einer Reaktion der Hydroxidionen mit CO₂ und/oder Hydrogencarbonat zu Hydrogencarbonat und/oder Carbonat. Die elektrochemische Zelle ist ferner zur Durchführung einer Reaktion des Hydrogencarbonats und/oder Carbonats mit Protonen zu CO₂ eingerichtet.

Alle Merkmale, Ausgestaltungen und Vorteile des eingangs beschriebenen Verfahrens gelten ebenso für das System und umgekehrt. Insbesondere umfasst die elektrochemische Zelle eine Kathode und eine Anode.

Die Reaktion des Hydrogencarbonats und/oder Carbonats mit Protonen zu CO₂ kann wie beschrieben an einem Festkörperelektrolyten oder an der Anode erfolgen. Die elektrochemische Zelle kann einen Ausgang zur Ableitung des hergestellten CO₂ aufweisen. Insbesondere ist die elektrochemische Zelle zur Herstellung der Protonen eingerichtet.

Die Reaktion der Hydroxidionen mit CO₂ und/oder Hydrogencarbonat zu Hydrogencarbonat und/oder Carbonat kann in der elektrochemischen Zelle oder außerhalb der elektrochemischen Zelle, beispielsweise in einem anderen Teil des Systems, erfolgen.

In einer Ausgestaltung weist die elektrochemische Zelle ferner einen Elektrolyten, insbesondere Festkörperelektrolyten, zur Durchführung der Reaktion des CO₂ und/oder Hydrogencarbonat zu Hydrogencarbonat und/oder Carbonat auf.

Der Festkörperelektrolyt dient hierbei der Leitung von Anionen und/oder der Herstellung von Hydrogencarbonat bzw. Carbonat. In einer Ausführungsform kann gelöstes Hydrogencarbonat zu Carbonat umgesetzt werden. In einer anderen Ausführungsform kann gasförmiges CO₂ in Hydrogencarbonat und/oder Carbonat umgesetzt werden.

In einer Ausgestaltung weist die elektrochemische Zelle ferner einen Festkörperelektrolyten zur Durchführung der Reaktion des Hydrogencarbonat und/oder Carbonat mit Protonen zu CO₂ auf. Der Festkörperelektrolyt dient hierbei der Leitung von Protonen bzw. der CO₂-Herstellung.

In einer Ausgestaltung umfasst das System ferner einen Gas-Flüssig-Reaktor zur Reaktion von CO₂ mit einer Lauge zu Hydrogencarbonat und/oder Carbonat. Insbesondere umfasst das System eine Leitung zum Leiten des entstehenden Hydrogencarbonat und/oder Carbonat in die elektrochemische Zelle.

Mit anderen Worten besteht eine Verbindung zwischen dem Gas-Flüssig-Reaktor und der elektrochemischen Zelle, insbesondere eine kontinuierliche Fließverbindung. Bevorzugt besteht auch in der entgegengesetzten Richtung eine Verbindung von der elektrochemischen Zelle zum Gas-Flüssig-Reaktor. So können in der elektrochemischen Zelle entstehende Hydroxidionen zurück in den Gas-Flüssig-Reaktor geleitet werden.

Nachfolgend werden Ausführungsbeispiele der Erfindung auch anhand von Figuren näher erläutert. Merkmale der Ausführungsbeispiele können einzeln oder in einer Mehrzahl mit den beanspruchten Gegenständen kombiniert werden, sofern nichts Gegenteiliges angegeben ist. Die beanspruchten Schutzbereiche sind nicht auf die Ausführungsbeispiele beschränkt.

Es zeigen:
- Figur 1:: eine erste Ausführungsform eines erfindungsgemäßen Verfahrens,
- Figur 2:: eine zweite Ausführungsform eines erfindungsgemäßen Verfahrens,
- Figur 3:: eine dritte Ausführungsform eines erfindungsgemäßen Verfahrens, sowie
- Figur 4:: eine vierte Ausführungsform eines erfindungsgemäßen Verfahrens.

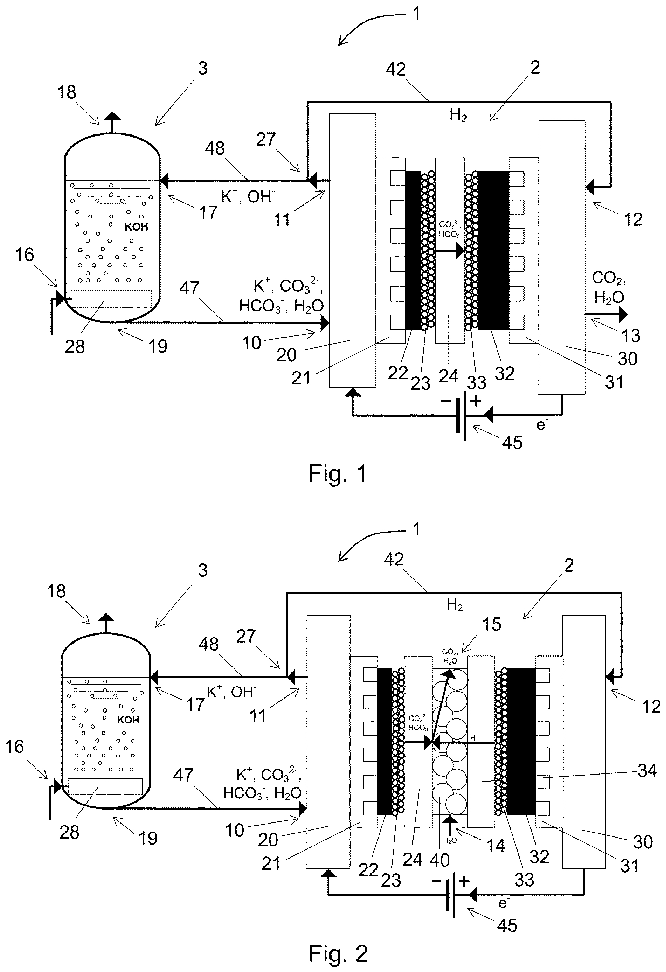

Figur 1 zeigt schematisch ein erfindungsgemäßes System 1 und ein erfindungsgemäßes Verfahren zur Herstellung von aufkonzentriertem CO₂. Das System 1 umfasst eine elektrochemische Zelle 2 und einen Gas-Flüssig-Reaktor 3, der beispielhaft als Gasblasensäulenreaktor ausgestaltet ist. Anstelle des Gasblasensäulenreaktors kann jeder beliebige Gas-Flüssig-Reaktor verwendet werden, der einen Stoffaustausch von der Gasphase in die Flüssigphase und umgekehrt ermöglicht.

Der Gas-Flüssig-Reaktor 3 weist eine Gaszuleitung 16 auf, in der ein CO₂ enthaltendes Gasgemisch zugeführt wird. Über eine Gasableitung 18 wird ein Gasgemisch, das weniger CO₂ enthält, abgeführt. Das CO₂ wird im Gas-Flüssig-Reaktor 3 mittels einer Lauge, hier beispielhaft KOH, gebunden. Es entstehen Carbonat CO₃²⁻ und Hydrogencarbonat HCO₃⁻. Über eine Flüssigkeitsableitung 19 und eine Leitung 47 wird eine Lauge enthaltende Lösung von Carbonat und Hydrogencarbonat abgeführt und zu einer Zuleitung 10 an der Kathode 20 der elektrochemischen Zelle 2 geleitet. Mittels einer Strom- und/oder Spannungsquelle 45 wird ein elektrischer Strom bzw. eine elektrische Spannung zwischen Anode 30 und Kathode 20 der elektrochemischen Zelle 2 angelegt. Mit Pfeilen ist der Transport von Elektronen dargestellt.

Insbesondere wird die Zuleitung 10 mit einer Flüssigkeit beschickt.

An der Kathode 20 findet in der Folge eine Elektrolyse von Wasser statt und es entstehen Wasserstoff H₂ und Hydroxidionen OH⁻. Über eine Ableitung 11 werden H₂ und OH⁻ von der Kathode 20 abgeführt. H₂ wird über einen Gas-Flüssigkeits-Trenner 27 separiert und über eine Leitung 42 insbesondere außerhalb des Inneren der elektrochemischen Zelle 2 zur Anode transportiert. Die wässrige Lösung aus OH⁻ wird über eine Leitung 48 und eine Flüssigkeitszuleitung 17 zurück in den Gas-Flüssig-Reaktor 3 gegeben, um die Lauge zu regenerieren.

Carbonat und Hydrogencarbonat werden von der Kathode 20 über ein Flussfeld 21 der Kathode 20, die Elektrode 22, einen Katalysator 23 und eine Membran 24 zu einem Katalysator 33 der Anode 30 transportiert. Über eine Elektrode 32 und ein Flussfeld 31 der Anode 30 werden Elektroden abgeleitet und der anodenseitige Reaktant (H₂) zugeführt.

H₂ wird der Anode 30 über eine Zuleitung 12 zugeführt. An der Anode 30 reagieren Carbonat und Hydrogencarbonat mit dem H₂ zu CO₂ und H₂O. Diese Produkte werden über eine Ableitung 13 der Anode 30 abgeführt. Über eine Gas-Flüssig-Trennung kann CO₂ isoliert werden. Das feuchte CO₂ kann auch direkt in einen nachgeschalteten, gasgespeisten CO₂-Elektrolyseur geleitet werden.

Die Elektrode 22 umfasst beispielhaft eine poröse Transportschicht (engl: "porous transport layer"; PTL) und/oder ist hydrophil. Typischerweise ist die poröse Transportschicht nicht als mikroporöse Schicht (engl.: "microporous layer") ausgestaltet, sondern hat ausschließlich Makroporen. Dies verbessert den Durchfluss und verringert den Druckverlust. Insbesondere befindet sich an der Elektrode kein hydrophober Bereich. Insbesondere ist die Elektrode hydrophil. Insbesondere ist die Elektrode 22 alkalisch oder stark alkalisch. Die Elektrode 32 hingegen ist hydrophob und umfasst eine zusätzliche mikroporöse Schicht. Die Elektrode 22 und/oder 32 kann durch Sprühbeschichtung hergestellt worden sein. Katalysator, etwa Pt/C und/oder in Form von Nanopartikeln, kann durch Sprühbeschichtung auf ein Substrat oder eine Membran aufgetragen worden sein.

Die Wasser-Elektrolyse kann eine alkalische Wasser-Elektrolyse sein. Das hat den Vorteil, dass keine teuren Edelmetalle als Katalysator benötigt werden.

Der Katalysator 23 und/oder 33 ist beispielsweise ein Pt/C-Katalysator, aber es kann grundsätzlich jeder andere geeignete Katalysator 23 bzw. 33 verwendet werden. Beispielsweise kann das das Pt durch Ni ersetzt werden. Insbesondere ist der Katalysator 23 alkalisch. Insbesondere enthält der Katalysator 23 ein lonomer, also ein ionisch leitendes Polymer. Das lonomer ist insbesondere alkalisch. Bevorzugt entspricht das lonomer dem Material der Membran 24. Beispielsweise kann PiperlON^{®}, insbesondere eine PiperlON^{®}-Dispersion verwendet werden.

Die Membran 24 ist insbesondere alkalisch. Die Membran 24 enthält insbesondere PiperlON^{®}, Fumatech^{®} und/oder Aemion^{®} oder ist daraus hergestellt.

Der Katalysator 33 ist insbesondere sauer bzw. enthält ein saures lonomer. Der pH-Wert kann beispielsweise 0 oder 1 betragen. Die ermöglicht, dass eine saure Wasserstoff-Oxidation erfolgen kann. Diese ist gegenüber der alkalischen Wasserstoff-Oxidation zu bevorzugen. Der Katalysator 33 ist insbesondere dazu eingerichtet, Protonen zu leiten. Insbesondere enthält der Katalysator 33 ein lonomer, also ein ionisch leitendes Polymer. Das lonomer ist insbesondere sauer. Ein saures lonomer ist besonders gut geeignet, Protonen zu leiten. Das lonomer kann als Schicht vorliegen. Oben beschriebene Merkmale des Katalysators 23 können ebenfalls für den Katalysator 33 gelten und umgekehrt.

Insbesondere befindet sich im Bereich der Anode 30 oder an der Anode 30 ein saures lonomer.

Die Elektrode 32 der Anodenseite ist insbesondere als Gasdiffusionsschicht (engl.: "gas diffusion layer", GDL) ausgestaltet. Die Elektrode 32 kann analog zu einer oben beschriebenen PTL aufgebaut sein. Zusätzlich oder alternativ kann die Elektrode 32 hydrophob sein bzw. einer hydrophoben Behandlung unterzogen worden sein. Zusätzlich oder alternativ kann die Elektrode 32 eine mikroporöse Schicht MPL aufweisen, die zum Katalysator 33 gewandt sein kann. Diese kann dem Wassermanagement dienen bzw. zum Ableiten von Wasser dienen.

Das Flussfeld 21 und/oder 31 kann als verschränktes (engl.: "inter-digitated") Flussfeld vorliegen. Hierbei liegt keine direkte Fließverbindung zwischen Einlass und Auslass vor. Die Lösung wird somit durch die Elektrode forciert. Alternativ kann das Flussfeld 21 und/oder 31 als Serpentinenflussfeld vorliegen. Hier liegt eine direkte (Bypass-)Verbindung zwischen Einlass und Auslass vor. Carbonat-/Hydrogencarbonatlösung und/oder Gas können somit auch an der Elektrode vorbei strömen.

Insbesondere erfolgt an der Kathode 20 eine Wasserstoffentwicklungsreaktion (engl.: "hydrogen evolution reaction", HER) oder Wasserstoffbildung. Insbesondere erfolgt an der Anode 30 eine Wasserstoffoxidationsreaktion (engl.: "hydrogen oxidation reaction", HOR).

Figur 2 zeigt ein abgewandeltes System 1 und ein abgewandeltes Verfahren. Es wird im Wesentlichen auf die Unterschiede zu Figur 1 eingegangen und ansonsten auf die obige Beschreibung verwiesen. Angrenzend an die Membran 24 ist zusätzlich ein Festkörperelektrolyt 40 vorhanden, an den - zur Anode 30 gewandt - eine weitere Membran 34 grenzt.

Der Festkörperelektrolyt 40 dient dazu, die Reaktion von Hydrogencarbonat und/oder Carbonat mit Protonen zu CO₂ und H₂O zu ermöglichen. Der Festkörperelektrolyt 40 ist zum Leiten von Protonen eingerichtet. Am Festkörperelektrolyt 40 befindet sich eine Zuleitung 14, durch die Wasser zugeführt werden kann. Am Festkörperelektrolyt 40 befindet sich eine Ableitung 15, durch die hergestelltes CO₂ und H₂O abgeführt werden kann. Es kann ein Gas-Flüssigkeits-Trenner vorgesehen sein, um CO₂ und H₂O zu trennen. H₂O kann durch Rückführung zur Zuleitung 14 rezirkuliert werden.

Wie in Figur 1 dient die Membran 24 dazu, Hydrogencarbonat und/oder Carbonat in Richtung Anode 30 zu leiten. Dazu ist die Membran insbesondere eine Anionenaustauschermembran. Allerdings erfolgt der Transport hier nur bis zum Festkörperelektrolyten 40.

Die Membran 34 zwischen dem Festkörperelektrolyten 40 und dem Katalysator 33 dient dazu, die an der Anode 30 hergestellten Protonen zum Festkörperelektrolyten 40 zu leiten. Die Membran 34 ist insbesondere eine Protonenaustauschermembran oder Protonen leitende Membran. Die Membran 34 kann aus sulfonierten Tetrafluorethen-Polymer und/oder Nafion^{™} hergestellt sein.

Beispielsweise kann der Festkörperelektrolyt 40 ein saures oder stark saures Ionenaustauscherharz, insbesondere Kationenaustauscherharz, umfassen. Das Harz kann in Form von Kügelchen vorliegen. Das Harz kann etwa sulfoniertes Polystyren bzw. Polystyrol enthalten oder sein, wie z. B. das kommerziell erhältliche Amberlite^{™} IR 120 H, oder Styrol-Divinylbenzol-Copolymer enthalten oder sein, wie z. B. das kommerziell erhältliche Dowex^{™}.

Beispielsweise kann der Festkörperelektrolyt 40 aus elektrogesponnenen Fasern, z. B. aus sulfonierten Tetrafluorethen-Polymer und/oder Nafion^{™} hergestellt sein. Dies erlaubt eine besonders dünne Ausführung des Festkörperelektrolyten, sodass die Protonen nur kürzere Strecken zurücklegen müssen und die ohmsche Verluste in der Folge minimiert werden. Beim Elektrospinnen wird insbesondere ein Trägerpolymer verwendet, wie z. B. hochmolekulares Polyethylenoxid (PEO). Dieses kann ein Molekulargewicht M_{W} von 8.000.000 g/mol aufweisen. Es kann eine Lösung mit 20 Gew.-% Gesamtpolymerkonzentration verwendet werden. Es kann ein Verhältnis von 99 zu 1 Gew.-% Nafion^{™} zu PEO verwendet werden. Es kann ein Lösungsmittel verwendet werden, welches 1-Propanol und Wasser enthält oder daraus besteht.

Insbesondere ist das System 1 so konfiguriert, dass im Festkörperelektrolyten 40 gasförmiges CO₂ erzeugt wird. Dieses kann einfach und in hoher Reinheit abgeführt und weiterverwendet werden.

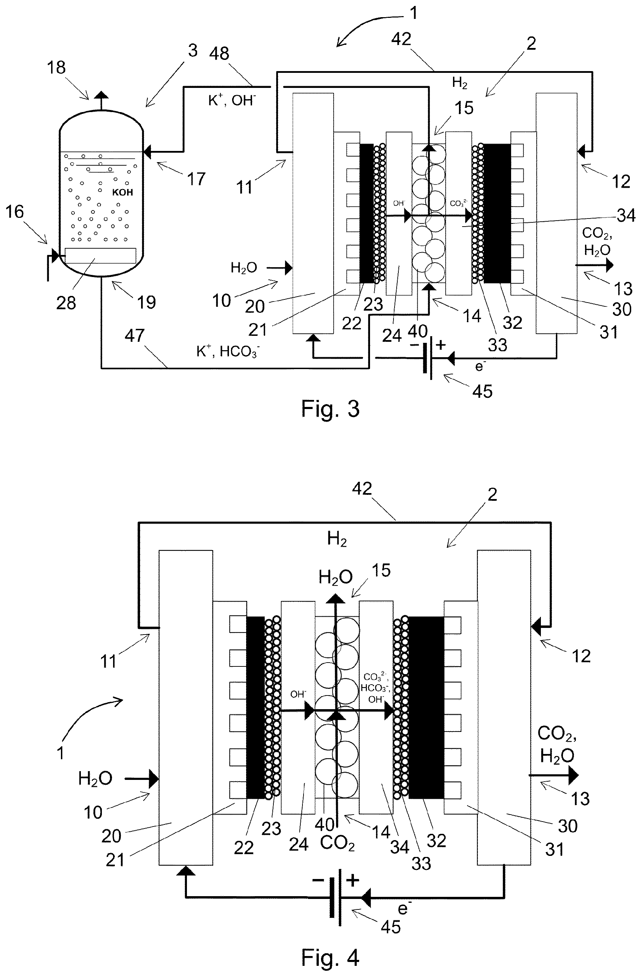

Figur 3 zeigt ein abgewandeltes System 1 und ein abgewandeltes Verfahren. Es wird im Wesentlichen auf die Unterschiede zu den Figuren 1 und 2 eingegangen und ansonsten auf die obige Beschreibung verwiesen.

Ähnlich wie in Figur 2 weist auch die hier gezeigte elektrochemische Zelle 2 einen Festkörperelektrolyten 40 auf. Dieser hat allerdings die Funktion, die Reaktion von Hydrogencarbonat zu Carbonat zu ermöglichen. Falls Carbonat zugeführt wird, wird dieses zur Anode 30 geleitet. Der Festkörperelektrolyt 40 ist insbesondere zum Leiten von Anionen eingerichtet, insbesondere nicht zum Leiten von Protonen.

Die Carbonat- und/oder Hydrogencarbonat-Lösung aus dem Gas-Flüssig-Reaktor 3 wird über die Zuleitung 14 direkt in den Festkörperelektrolyten 40 geleitet. Nach erfolgter Reaktion wird die Lösung mit Hydroxidionen über die Ableitung 15 zurück in den Gas-Flüssig-Reaktor 3 geleitet, um wie beschrieben die Lauge zu regenerieren.

In der elektrochemischen Zelle 2 ist die Membran 24 zum Leiten von Hydroxidionen eingerichtet. Dazu ist die Membran 24 Anionenaustauschermembran bzw. alkalische Membran ausgestaltet. Die Membran 24 dient dem Leiten von Anionen. Die Membran 24 kann wie die oben beschriebene Membran 24 aus Figur 1 aufgebaut sein.

Die Membran 34 ist insbesondere zum Leiten von Carbonat vom Festkörperelektrolyten 40 in Richtung Anode 30 eingerichtet. Die Membran 34 ist insbesondere alkalisch. Der Katalysator 33 ist insbesondere sauer bzw. enthält ein saures lonomer.

Der Kathode 20 wird lediglich Wasser zugeführt, und zwar durch die Zuleitung 10. Zusätzlich zur Darstellung in Figur 3 kann nicht reagiertes Wasser durch Rückführung zu Zuleitung 10 rezirkuliert werden. Entstehender, insbesondere gasförmiger Wasserstoff wird über die Ableitung 11 abgezogen und/oder mit einem Gas-Flüssigkeits-Trenner separiert und über die Leitung 42 und die Zuleitung 12 der Anode 30 zugeführt. Die Anode 30 ist insbesondere sauer. An der Anode 30 werden aus Carbonat und Protonen H₂O und insbesondere konzentriertes CO₂ gebildet. Über die Ableitung 13 der Anode 30 werden H₂O und CO₂ abgeführt.

Der Festkörperelektrolyt 40 kann auch in diesem Fall durch Elektrospinnen hergestellt werden. Diesbezüglich wird auf die obige Beschreibung in Zusammenhang mit Figur 2 verwiesen. Darüber hinaus kann hier auch ein lonomer verwendet werden, welches Anionen leitende Materialien enthält oder daraus besteht.

Figur 4 zeigt eine weitere Abwandlung des Verfahrens aus Figur 3. Das hier gezeigte System 1 enthält die elektrochemische Zelle 2, jedoch keinen Gas-Flüssig-Reaktor 3. Weil kein Gas-Flüssig-Reaktor bzw. keine Lauge verwendet wird, kann diese Lauge nicht zur Anode diffundieren und dort den pH-Wert erhöhen und/oder funktionelle Gruppen des sauren lonomers mit einem Kaliumion vergiften (engl. Fachbegriff in diesem Zusammenhang: "metal poisoning"). Die elektrochemische Zelle 2 entspricht insbesondere derjenigen aus Figur 3, so dass hier lediglich auf Unterschiede eingegangen wird.

Insbesondere unterscheidet sich der Betrieb, und zwar wie folgt: Es wird ein CO₂ enthaltendes Gasgemisch direkt in die Zuleitung 14 des Festkörperelektrolyten 40 geleitet. Das Gasgemisch kann mindestens 5 Vol.-%, insbesondere mindestens 10 Vol.-% CO₂ und/oder maximal 50 Vol.-%., insbesondere maximal 30 oder 20 Vol.-% CO₂ enthalten. Höhere Konzentrationen als in der Atmosphäre, die z. B. aus einer Punktquelle stammen, ermöglichen einen besonders effizienten Betrieb. Es ist allerdings ebenso möglich, bei derartigen, höheren CO₂-Konzentrationen den beschriebenen Gas-Flüssig-Reaktor zu verwenden.

Das CO₂ reagiert im bzw. am Festkörperelektrolyten 40 mit Hydroxidionen zu Wasser und Carbonat und/oder Hydrogencarbonat. Wasser wird über die Ableitung 15 abgeleitet. Carbonat bzw. Hydrogencarbonat gelangen durch die Membran 34, die wie in Figur 3 ausgestaltet sein kann, in Richtung Anode 30, um dort mit Protonen zu insbesondere konzentriertem CO₂ und H₂O umgesetzt zu werden. Diese können wieder über die Ableitung 13 abgeleitet werden.

### Bezugszeichenliste

| | |
|---|---|
| System | 1 |
| Elektrochemische Zelle | 2 |
| Gas-Flüssig-Reaktor | 3 |
| Zuleitung | 10 |
| Ableitung | 11 |
| Zuleitung | 12 |
| Ableitung | 13 |
| Zuleitung | 14 |
| Ableitung | 15 |
| Gaszuleitung | 16 |
| Flüssigkeitszuleitung | 17 |
| Gasableitung | 18 |
| Flüssigkeitsableitung | 19 |
| Kathode | 20 |
| Flussfeld | 21 |
| Elektrode | 22 |
| Katalysator | 23 |
| Membran | 24 |
| Gas-Flüssigkeits-Trenner | 27 |
| Gasverteiler | 28 |
| Anode | 30 |
| Flussfeld | 31 |
| Elektrode | 32 |
| Katalysator | 33 |
| Membran | 34 |
| Festkörperelektrolyt | 40 |
| Leitung | 42 |
| Strom- und/oder Spannungsquelle | 45 |
| Leitung | 47 |
| Leitung | 48 |

## Patentansprüche

1. Verfahren zur Herstellung von CO₂, bei dem
- in einer elektrochemischen Zelle (2) aus Wasser Hydroxidionen hergestellt werden,
- die Hydroxidionen mit CO₂ und/oder Hydrogencarbonat zu Hydrogencarbonat und/oder Carbonat reagieren, und
- das hergestellte Hydrogencarbonat und/oder Carbonat in der elektrochemischen Zelle (2) mit Protonen zu CO₂ reagiert.

2. Verfahren nach dem vorhergehenden Anspruch, wobei die Hydroxidionen an einer Kathode (20) der elektrochemischen Zelle (2) hergestellt werden.

3. Verfahren nach dem vorhergehenden Anspruch, wobei Wasserstoff hergestellt wird, um die Protonen zu erzeugen.

4. Verfahren nach dem vorhergehenden Anspruch, wobei Wasserstoff an der Kathode (20) hergestellt wird und zur Anode (30) geleitet wird.

5. Verfahren nach einem der vorhergehenden Ansprüche, wobei die Reaktion von Hydrogencarbonat und/oder Carbonat mit Protonen zu CO₂ in einem Festkörperelektrolyten (40) innerhalb der elektrochemischen Zelle (2) erfolgt.

6. Verfahren nach einem der vorhergehenden Ansprüche, wobei die Reaktion von Hydrogencarbonat und/oder Carbonat mit Protonen an der Anode (30) erfolgt.

7. Verfahren nach einem der Ansprüche 1 bis 5, wobei die Reaktion von CO₂ und/oder Hydrogencarbonat zu Hydrogencarbonat und/oder Carbonat in der elektrochemischen Zelle (2) erfolgt, insbesondere in einem Festkörperelektrolyten (40).

8. Verfahren nach Anspruch 6, wobei eine Lösung von Carbonat und/oder Hydrogencarbonat in die elektrochemische Zelle (2) geleitet wird.

9. Verfahren nach Anspruch 6, wobei gasförmiges CO₂ in die elektrochemische Zelle (2) geleitet wird.

10. Verfahren nach einem der Ansprüche 1 bis 5, wobei CO₂ in einem Gas-Flüssig-Reaktor (3) mit einer Lauge zu Hydrogencarbonat und/oder Carbonat reagiert und das entstehende Hydrogencarbonat und/oder Carbonat in die elektrochemische Zelle (2) geleitet wird.

11. Verfahren nach dem vorhergehenden Anspruch, wobei die in der elektrochemischen Zelle (2) entstehende Hydroxidionen in den Gas-Flüssig-Reaktor (3) geleitet werden.

12. System (1) zur Herstellung von CO₂, umfassend eine elektrochemische Zelle (2) zur Herstellung von Hydroxidionen aus Wasser zwecks Durchführung einer Reaktion der Hydroxidionen mit CO₂ und/oder Hydrogencarbonat zu Hydrogencarbonat und/oder Carbonat, wobei die elektrochemische Zelle (2) ferner zur Durchführung einer Reaktion des Hydrogencarbonats und/oder Carbonats mit Protonen zu CO₂ eingerichtet ist.

13. System (1) nach Anspruch 11, wobei die elektrochemische Zelle (2) ferner einen Festkörperelektrolyten (40) zur Durchführung der Reaktion des CO₂ und/oder Hydrogencarbonat zu Hydrogencarbonat und/oder Carbonat umfasst.

14. System nach Anspruch 11, wobei die elektrochemische Zelle (2) ferner einen Festkörperelektrolyten (40) zur Durchführung der Reaktion des Hydrogencarbonat und/oder Carbonat mit Protonen zu CO₂ umfasst.

15. System (1) nach Anspruch 11 oder 13, ferner umfassend einen Gas-Flüssig-Reaktor (3) zur Reaktion von CO₂ mit einer Lauge zu Hydrogencarbonat und/oder Carbonat, wobei das System (1) eine Leitung (47) zum Leiten des entstehenden Hydrogencarbonat und/oder Carbonat in die elektrochemische Zelle (2) aufweist.
